# EUROPÄISCHE PATENTANMELDUNG

(11) **EP 2 618 100 A1**
(43) Veröffentlichungstag der Anmeldung: **24.07.2013**
(21) Anmeldenummer: 12008513.9
(22) Anmeldetag: 21.12.2012
(51) Int. Cl.: G01B 7/00

(54) **Induktiver Sensor**

(30) Priorität: 18.01.2012 DE 102012000838
(71) Anmelder: ROBERT BOSCH GMBH, 70442 Stuttgart (DE)
(72) Erfinder: Thierbach, Peter, 71634 Ludwigsburg (DE); Strohm, Peter, 74388 Talheim (DE)
(74) Vertreter: Wiesmann, Stephan

(57) **Zusammenfassung**

Offenbart ist ein induktiver Sensor zur Messung einer Position eines Stellglieds eines hydraulischen Ventils. Dieser hat ein fluiddichtes Sensorrohr, in dem ein Fühlerelement bewegbar angeordnet ist. Das Fühlerelement ist mit einer Zugfeder in seiner Ausfahrrichtung mit einer Federkraft beaufschlagbar.

## Beschreibung

Die Erfindung geht aus von einem induktiven Sensor gemäß dem Oberbegriff des Patentanspruchs 1.

In dem Datenblatt RD 29076/12.05 der Bosch Rexroth AG ist ein derartiger Sensor offenbart. Dieser dient zur Messung einer Position eines Stellglieds in Form eines Ventilschiebers eines Wegeventils. Hierbei ist ein ferromagnetischer Kern in einem Sensorrohr beweglich geführt und mit dem Ventilschieber, beispielsweise über eine Schraubverbindung, fest verbunden. Das Sensorrohr ist von einem Messspulensystem umgriffen. Nachteilig hierbei ist, dass die Schraubverbindung des magnetischen Kerns mit dem Ventilschieber zum Einen einen hohen Montageaufwand erfordert und zum Anderen vorrichtungstechnisch aufwendig ist.

Aus dem Stand der Technik ist ferner ein Fühlerelement in Form eines Stabkerns bekannt, der einen magnetischen Kern aufweist und mit einer Federkraft einer Druckfeder in seiner Ausfahrrichtung beaufschlagt ist. Die Druckfeder ist hierbei in einem Sensorrohr angeordnet. Der Stabkern hat einen ausfahrbaren Abschnitt und einen im Sensorrohr verbleibenden Abschnitt, der von der spiralförmigen Druckfeder umfasst ist. Die Druckfeder beaufschlagt den Stabkern dann etwa zwischen den beiden Stabkernbereichen mit einer Federkraft über einen Federteller. Der Stabkern liegt dann mit seiner in Ausfahrrichtung weisenden Stirnfläche an einem Stellglied, beispielsweise an einem Ventilschieber an. Die Druckfeder benötigt somit eine Auflagefläche am Stabkern, die einen Querschnitt zwischen dem Sensorrohr und dem Stabkern in diesem Bereich nachteilig reduziert. Dies führt bei einer Verschiebung des Stabkerns zusammen mit dem Federteller im Sensorrohr zu einem hohen Strömungswiderstand, wodurch der Sensor träger wird und sich der Stabkern bei höher dynamischen Schaltvorgängen des Stellglieds beziehungsweise Ventilschiebers von diesem abheben kann. Des Weiteren ist nachteilig, dass die Druckfeder im gespannten Zustand radial auswölbt, wodurch diese am Stabkern und/oder am Sensorrohr anliegt, was zu einer hohen Reibung und einem hohen Verschleiß führt. Die Auswölbung kann außerdem durch die Anlage der Druckfeder zu einer Radialbelastung des Stabkerns führen, wodurch dieser aus seiner Zentrierung gelangen kann.

Demgegenüber liegt der Erfindung die Aufgabe zugrunde einen induktiven Sensor zu schaffen, der einfach montierbar ist und eine hohe Lebensdauer aufweist.

Diese Aufgabe wird gelöst durch einen induktiven Sensor gemäß den Merkmalen des Patentanspruchs 1.

Sonstige vorteilhafte Weiterbildungen der Erfindung sind Gegenstand weiterer Unteransprüche.

Erfindungsgemäß hat ein induktiver Sensor, insbesondere ein induktiver Wegaufnehmer zur Messung einer Position eines Stellglieds in einem hydraulischen Ventil, ein, insbesondere fluiddichtes, Sensorrohr. In diesem ist ein Fühlerelement beweglich angeordnet. Über eine Sensorfeder ist das Fühlerelement mit einer Federkraft in einer Ausfahrrichtung beaufschlagbar, um an einem Stellglied anzuliegen. Zur Messung und zum Erfassen einer Position des Fühlerelements und somit des Stellglieds ist ein Messspulensystem vorgesehen. Mit Vorteil handelt es sich bei der Sensorfeder um eine Zugfeder.

Diese Lösung hat den Vorteil, dass sich die Sensorfeder beziehungsweise Zugfeder im Vergleich zum Stand der Technik nicht mehr auswölben kann, da sie in ihrer Entspannungsrichtung das Fühlerelement mit einer Federkraft beaufschlagt und in ihrer Spannrichtung über ein Stellglied und das Fühlerelement gespannt wird. Durch die fehlende Auswölbung kann auch kein Verschleiß zwischen der Sensorfeder und dem Sensorrohr beziehungsweise dem Fühlerelement auftreten. Des Weiteren wird durch die fehlende Auswölbung das Fühlerelement nicht in seiner Radialrichtung belastet. Ferner ist bei einer Zugfeder kein Federteller notwendig, wodurch ein Strömungsquerschnitt zwischen dem Fühlerelement und dem Sensorrohr, im Vergleich zum Stand der Technik, nicht verengt ist. Gegenüber einem mit dem Stellglied verschraubten Fühlerelement hat der erfindungsgemäße Sensor den Vorteil, dass er einfach montierbar ist und mit einem vergleichsweise geringen vorrichtungstechnischen Aufwand herstellbar ist.

Vorzugsweise ist das Fühlerelement ein Stabkern, der zusammen mit der Zugfeder im Wesentlichen zentriert in seiner axialen Lage verbleibt, im Gegensatz zum Stand der Technik, wo eine Auswölbung einer Druckfeder zu einem Verschwenken des Stabkerns führen kann.

In einer weiteren Ausgestaltung der Erfindung ist die Zugfeder zwischen dem Stabkern und dem außerhalb des Sensorrohrs angeordneten Messspulensystem, im Wesentlichen in dem Sensorrohr, platzsparend angeordnet.

Die Zugfeder greift an dem Stabkern vorzugsweise an dessen entgegen die Ausfahrrichtung weisenden Endabschnitt an. Hierbei ist es vorteilhaft, wenn die Zugfeder dann an einer Stirnseite dieses Endabschnitts platzsparend angreift. Hierdurch kann eine Außenmantelfläche des Stabkerns unabhängig von der Zugfeder ausgestaltet sein und es werden an der Außenmantelfläche keine vorrichtungstechnischen Mittel benötigt, damit die Zugfeder angreifen kann. Dies führt dazu, dass beispielsweise ein ferromagnetischer Kern, falls es sich bei dem induktiven Sensor um einen Differentialspulensensor handelt, völlig unabhängig von der Angriffsstelle der Zugfeder an der Außenmantelfläche des Stabkerns anordenbar ist.

Bei einer vorteilhaften Ausführungsform ist die Zugfeder eine den Stabkern zumindest abschnittweise umgreifende Spiralfeder.

Vorteilhaft ist, wenn die Zugfeder an einer in die Stirnseite des Endabschnitts des Stabkerns eingebrachte Aussparung, insbesondere Sacklochbohrung, eingreift. Eine derartige Aussparung kann äußerst kostengünstig mit geringem vorrichtungstechnischem Aufwand hergestellt werden und führt dazu, dass die Zugfeder sicher an dem Stabkern angreifen kann.

Mit Vorteil ist ein am Stabkern festgelegter Endabschnitt der Zugfeder derart ausgebildet, dass er in eine Ausfahrrichtung des Stabkerns weist und in die Aussparung des Stabkerns eintaucht. Der Endabschnitt kann dabei beispielsweise u-förmig ausgebildet sein, wobei ein freier Schenkel des Endabschnitts in die Aussparung eintaucht. Die Zugfeder hakt sich somit sicher und fest in den Stabkern ein.

Eine weitere Ausgestaltung der Erfindung stützt sich ein Endabschnitt der Zugfeder außerhalb des Sensorrohrs am Sensor ab, wodurch innerhalb des Sensorrohrs keine Mittel zur Abstützung der Zugfeder notwendig sind, die zu einer Verringerung eines Öffnungsquerschnitts zwischen Stabkern und Sensorrohr führen würden.

Der sich außerhalb des Sensorrohrs abstützende Endabschnitt der Zugfeder kragt vorrichtungstechnisch einfach radial von der Zugfeder weg und stützt sich dann mit diesem radial wegkragenden Endabschnitt ab. Der Abstützbereich der Zugfeder ist somit, in Radialrichtung gesehen, vom übrigen Bereich der Zugfeder entfernt und somit auch vom Stabkern beabstandet, wodurch die Abstützung eine Verschiebebewegung des Stabkerns nicht beeinflusst.

Bevorzugterweise ist der Stabkern einerseits mit einem Ausfahrabschnitt über ein Zentrierelement zentriert und geführt und andererseits über die Zugfeder zentriert.

Im Folgenden wird eine bevorzugte Ausführungsform der Erfindung anhand schematischer Zeichnung näher erläutert. Es zeigen:
Figur 1 in einer Längsschnittansicht einen erfindungsgemäßen induktiven Sensor gemäß einem Ausführungsbeispiel;
Figur 2 in einer perspektivischen Längsschnittansicht den erfindungsgemäßen Sensor gemäß dem Ausführungsbeispiel und
Figur 3 in einer perspektivischen Darstellung eine Zugfeder des erfindungsgemäßen Sensors.

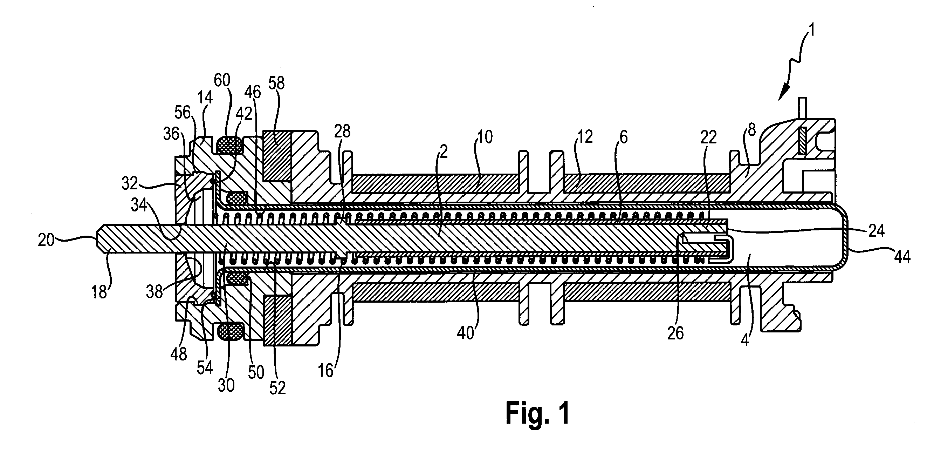

Gemäß Figur 1 ist ein induktiver Sensor 1 bzw. induktiver Wegaufnehmer dargestellt. Dieser ist an ein Ventilgehäuse, beispielsweise eines hydraulischen Wegeventils, oder an einem Betätigungssystem von diesem anbringbar. Mit dem Sensor 1 kann dann eine Relativposition eines Ventilschiebers des Wegeventils gemessen werden.

Der Sensor 1 hat ein Fühlerelement in Form eines Stabkerns 2, der beweglich in einem als fluiddichtem Druckrohr ausgebildeten Sensorrohr 4 bewegbar ist. Der Stabkern 2 ist von einer ferromagnetischen Stabkernhülse 6 umgriffen, die auf dessen Außenmantelfläche festgelegt ist. das Sensorrohr 4 wiederum ist von einem Spulenträger 8 umgriffen auf dem zwei in Axialrichtung zueinander beabstandete Spulen 10 und 12 angeordnet sind. Des Weiteren ist ein Befestigungsstutzen 14 vorgesehen, mit dem der Sensor 1 in eine entsprechende Aussparung beispielsweise eines Ventilgehäuses eines Wegeventils einsetzbar ist. Der Stabkern 2 ist über eine Sensorfeder, die als Zugfeder 16 ausgebildet ist, in einer Ausfahrrichtung, in der Figur 1 nach links, mit einer Federkraft beaufschlagt.

Der Stabkern 2 kragt mit einem in Ausfahrrichtung weisenden Endabschnitt 18 aus dem Sensorrohr 4 aus, wobei der Stabkern 2 mit einer Stirnseite 20 des Endabschnitts 18 an dem Stellglied anlegbar ist, dessen Relativposition über den Sensor 1 gemessen wird. An seinem zum Endabschnitt 18 entgegengesetzten Endabschnitt 22 ist von der zur Stirnseite 20 entgegengesetzten Stirnseite 24 her etwa koaxial zu seiner Längsachse eine Aussparung in Form einer Sacklochbohrung 26 eingebracht, in die die Zugfeder 16 eingreift. Die etwa hohlzylindrische Stabkernhülse 6 erstreckt sich von der gegen die Ausfahrrichtung des Stabkerns 2 weisenden Stirnseite 24 etwa koaxial zur Längsachse des Stabkerns 2. Eine axiale Länge der Stabkernhülse 6 entspricht etwa einem Abstand der voneinander wegweisenden Stirnseiten der Spulen 10 und 12, wobei die Stabkernhülse 6 in der in der Figur 1 gezeigten Position vollständig innerhalb der Spulen 10 und 12 angeordnet ist. In Axialrichtung von der Stabkernhülse 6 beabstandet ist am Stabkern 2 ein Radialbund 28 ausgebildet. Dieser hat einen etwas größeren Durchmesser als die Stabkernhülse 6 und dient zur Begrenzung eines Ausfahrwegs des Stabkerns 2 aus dem Sensor 1. An den Radialbund 28 schließt sich ein Ausfahrabschnitt 30 des Stabkerns 2 ein, der durch ein Zentrierelement 32 des Sensors 1 hindurchgeführt ist. Dieses ist ringförmig ausgestaltet und in den Befestigungsstutzen 14 fest eingesetzt. Das Zentrierelement 32 hat eine etwa koaxial zum Stabkern 2 ausgebildete im Wesentlichen kreiszylindrische Durchgangsöffnung 34 durch die der Stabkern 2 gleitend hindurchgeführt ist. Das Zentrierelement 32 hat eine konkave zum Sensorrohr 4 weisende Innenmantelfläche 36, deren Durchmesser größer als der Durchmesser des Sensorrohrs 4 ist und die die Durchgangsöffnung 34 mit einem kreisringförmigen Anschlagsabschnitt 38 umgreift, der etwa in einer Ebene ausgebildet ist, die sich senkrecht zur Längsachse des Stabkerns 2 erstreckt und an die der Radialbund 28 des Stabkerns 2 zur Begrenzung von dessen Verschiebeweg anschlagen kann.

Das Sensorrohr 4 hat einen Rohrabschnitt 40, an dessen einen axialen Endabschnitt sich ein Flanschabschnitt 42 anschließt und dessen anderer axialer Endabschnitt durch einen einstückig mit dem Rohrabschnitt ausgebildeten Stirnabschnitt 44 abgeschlossen ist. das Sensorrohr 4 begrenzt dann zusammen mit der konkaven Innenmantelfläche 36 des Zentrierelements 32 einen Innenraum. Der Flanschabschnitt 42 des Sensorrohrs 4 ist innerhalb des Befestigungsstutzens 14 angeordnet, der eine durch den Rohrabschnitt 40 durchsetzte Durchgangsausnehmung 46 aufweist. Diese hat eine Ringausnehmung 48, deren Durchmesser geringfügig kleiner als ein Außendurchmesser des Flanschabschnitts 42 des Sensorrohrs 4 ist. Im Anschluss an die Ringausnehmung 48 hat die Durchgangsausnehmung 46 eine Dichtausnehmung 50, die einen kleineren Durchmesser als die Ringausnehmung 48 und einen größeren Durchmesser als das Sensorrohr 4 aufweist, wodurch zwischen dem Sensorrohr 4 und der Dichtausnehmung 50 ein Ringraum begrenzt ist, in dem ein O-Dichtring dichtend eingesetzt ist. Nach der Dichtausnehmung 50 ist eine Halteausnehmung 52 vorgesehen, deren Durchmesser etwa dem Durchmesser des Sensorrohrs 4 entspricht, wodurch die Halteausnehmung 52 im Wesentlichen am Sensorrohr 4 anliegt. Zwischen der Ringausnehmung 48 und der Dichtausnehmung 50 des Befestigungsstutzens 14 ist eine sich etwa senkrecht zur Längsachse des Stabkerns 2 erstreckende Ringfläche 54 ausgebildet. Das Sensorrohr 4 liegt dann mit seinem Flanschabschnitt 42 an der Ringfläche 54 an und ist dabei im Wesentlichen in die Ringausnehmung 48 fest eingepresst, da ihr Durchmesser größer als der Durchmesser der Ringausnehmung 48 ist.

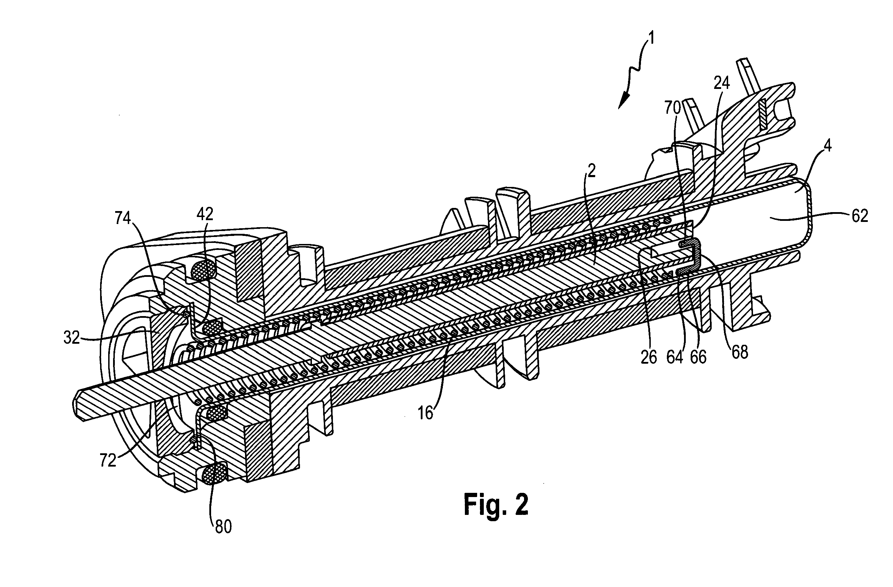

Die Zugfeder 16 ist zwischen dem Flanschabschnitt 42 und dem Zentrierelement 32 festgelegt, was unten stehend in Figur 2 näher erläutert ist.

Das Zentrierelement 32 hat einen äußeren Radialbund, der in eine innerhalb der Ringausnehmung 48 ausgebildete Ringnut eintaucht, wodurch das Zentrierelement 32 in Axialrichtung lagefixiert ist.

Der Befestigungsstutzen 14 ist an seinem zum Spulenträger 8 weisenden Endabschnitt radial zurückgestuft auf den ein Befestigungsflansch 58 pressgepasst ist, wobei dann eine Stirnfläche des Befestigungsstutzens 14 und des Befestigungsflansches 58 an einer Stirnfläche des Spulenträgers 8 anliegen. Des Weiteren ist am Befestigungsstutzen 14 eine Ringausnehmung zur Aufnahme eines O-Dichtrings 60 ausgebildet. Der Befestigungsstutzen 14 wird dann über den Befestigungsflansch 58, abgedichtet durch den O-Dichtring 60, an einem in den Figuren nicht dargestellten Ventilgehäuse befestigt.

Anhand der Figur 2 wird die Ausgestaltung und Befestigung der Zugfeder 16 näher erläutert. Diese ist spiralförmig ausgestaltet und erstreckt sich etwa ausgehend vom Flanschabschnitt 42 des Sensorrohrs 4 in dieses hinein und umgreift dabei den Stabkern 2. Windungen der Zugfeder 16 sind somit zwischen dem Stabkern 2 beziehungsweise dem Stabkern 2 und der Stabkernhülse 6 und einer Innenmantelfläche 62 des Sensorrohrs 4 angeordnet. Die Windungen sind dabei vorzugsweise sowohl von der Innenmantelfläche 62 als auch vom Stabkern 2 beziehungsweise Stabkern 2 und Stabkernhülse 6 beabstandet, damit sich die Zugfeder 16 im Einsatz frei bewegen kann, ohne an benachbarte Bauteile zu reiben, was zu einem Verschleiß führen würde. Ein Endabschnitt 64 der Zugfeder 16 ist zur Befestigung am Stabkern 2 u-förmig gebogen. Der Endabschnitt 64 hat somit einen sich von der letzten Windung etwa im Parallelabstand zur Längsachse des Stabkerns 2 weg erstreckenden ersten Schenkel 66, einen sich etwa radial zur Längsachse des Stabkerns 2 erstreckenden Verbindungsschenkel 68 und einen sich etwa koaxial zur Längsachse des Stabkerns 2 erstreckenden zweiten etwa in Ausfahrrichtung weisenden Schenkel 70. Dieser taucht in die Sacklochbohrung 26 des Stabkerns 2 ein und ist dabei kürzer als eine Tiefe der Sacklochbohrung 26. Durch den zweiten Schenkel 70 wird die Zugfeder 16 in Radialrichtung am Stabkern 2 gehaltert. Der Verbindungsschenkel 68 liegt an der Stirnseite 24 des Stabkerns 2 an, wodurch dieser mit einer Federkraft in Richtung seiner Ausfahrrichtung beaufschlagbar ist, falls die Zugfeder, wie in der gezeigten Figur 2, gespannt ist.

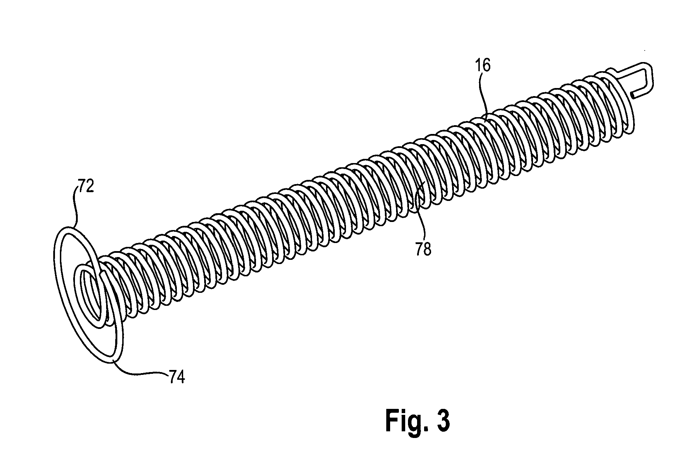

Ein zum Endabschnitt 64 der Zugfeder 16 entgegengesetzter Endabschnitt 72 dient zur Halterung der Zugfeder 16 im Sensor 1. Zur Erläuterung des Endabschnitts 72 wird neben der Figur 2 die Figur 3 herangezogen. Der Endabschnitt 72 hat gemäß Figur 3 eine etwa kreisförmige Haltewindung 74, die sich etwa in einer Ebene quer zur Längsachse der Zugfeder 16 erstreckt. Die Haltewindung 76 ist außerhalb des Sensorrohrs 4 in Figur 2 angeordnet und hat einen größeren Durchmesser als die innerhalb des Sensorrohrs 4 angeordneten Windungen 78 der Zugfeder 16. Ein Durchmesser der Haltewindung 76 ist dabei etwas kleiner als ein Durchmesser des Flanschabschnitts 42 des Sensorrohrs 4. Die Haltewindung 74 ist dadurch gebildet, dass sich der Endabschnitt 72 etwa spiralförmig in einer Ebene in Radialrichtung gesehen von den Windungen 78 weg erstreckt. Die Haltewindung 74 ist gemäß Figur 2 in Axial- und Radialrichtung zwischen dem Flanschabschnitt 42 des Sensorrohrs 4 und einer Ringstirnfläche 80 des Zentrierelements 32 fest gehaltert, womit es sowohl axial als auch radial gehaltert ist.

Im Einsatz des Sensors 1 wird die Zugfeder 16 gemäß Figur 2 in einer Einfahrrichtung des Stabkerns 2 gespannt, in dem ihr Endabschnitt 64 über den Stabkern 2 weg von ihrem fest gehalterten Endabschnitt 72 bewegt wird. In entgegengesetzter Richtung entspannt sich die Zugfeder 16. Der Stabkern 2 ist zum Einen durch das Zentrierelement 32 und zum anderen durch die Zugfeder 16 im Bereich seines Endabschnitts 22 zentriert. Die Zentrierbereiche - also das Zentrierelement 32 und Endabschnitt 22 - des Stabkerns 2 sind somit in Axialrichtung äußerst weit voneinander beabstandet, was zu einer sicheren und genauen Zentrierung führt.

Die Zugfeder 16 wölbt sich im Gegensatz zu einer Druckfeder gemäß dem Stand der Technik nicht aus. Beim Einsatz einer Druckfeder würde sich diese beispielsweise am Stirnabschnitt 44 innerhalb des Sensorrohrs 4 gemäß Figur 1 abstützen und den Stabkern 2 über einen im Bereich seiner Außenmantelfläche befestigten Federteller mit einer Federkraft beaufschlagen. Dies hat zum Einen den Nachteil, dass der Federteller beziehungsweise die Befestigung der Druckfeder am Stabkern 2 einen Öffnungsquerschnitt zwischen dem Stabkern 2 und dem Sensorrohr 4 verringern würde, was bei einer Verschiebebewegung des Stabkerns 2 zu einem hohen fluidischen Widerstand durch ein innerhalb des Sensor 1 vorhandenes Fluid führen würde. Des Weiteren wölbt sich die Druckfeder unter Spannung aus, was dazu führt, dass sich diese bei einer Relativbewegung zum Stabkern 2 und zum Sensorrohr 4 an diese Bauteile reiben kann, was wiederum zu einem hohen Verschleiß des Sensors 1 führt.

Bei dem erfindungsgemäßen Sensor 1 gemäß den Figuren 1 und 2 handelt es sich um einen Differenzialspulensensor. Alternativ wäre denkbar, diesen beispielsweise auch als Tauchankersensor oder als LVDT (Linear Variable Differential Transformer)-Sensor auszubilden.

Offenbart ist ein induktiver Sensor zur Messung einer Position eines Stellglieds eines hydraulischen Ventils. Dieser hat ein fluiddichtes Sensorrohr, in dem ein Fühlerelement bewegbar angeordnet ist. Das Fühlerelement ist mit einer Zugfeder in seiner Ausfahrrichtung mit einer Federkraft beaufschlagbar.

### Bezugszeichenliste:

- 1: Sensor
- 2: Stabkern
- 4: Sensorrohr
- 6: Stabkernhülse
- 8: Spulenträger
- 10: Spule
- 12: Spule
- 14: Befestigungsstutzen
- 16: Zugfeder
- 18: Endabschnitt
- 20: Stirnseite
- 22: Endabschnitt
- 24: Stirnseite
- 26: Sacklochbohrung
- 28: Radialbund
- 30: Ausfahrabschnitt
- 32: Zentrierelement
- 34: Durchgangsöffnung
- 36: Innenmantelfläche
- 38: Anschlagsabschnitt
- 40: Rohrabschnitt
- 42: Flanschabschnitt
- 44: Stirnabschnitt
- 46: Durchgangsausnehmung
- 48: Ringausnehmung
- 50: Dichtausnehmung
- 52: Halteausnehmung
- 54: Ringfläche
- 56: Radialbund
- 58: Befestigungsflansch
- 60: O-Dichtring
- 62: Innenmantelfläche
- 64: Endabschnitt
- 66: erster Schenkel
- 68: Verbindungsschenkel
- 70: zweiter Schenkel
- 72: Endabschnitt
- 74: Haltewindung
- 78: Windungen
- 80: Ringstirnfläche

## Patentansprüche

1. Induktiver Sensor mit einem Sensorrohr (4), in dem ein Fühlerelement (2) verschiebbar angeordnet ist, das über eine Sensorfeder (16) mit einer Federkraft in einer Ausfahrrichtung beaufschlagbar ist, wobei ein Messspulensystem (10, 12, 6) zum Erfassen einer Position des Fühlerelements (2) vorgesehen ist, **dadurch gekennzeichnet, dass** die Sensorfeder eine Zugfeder (16) ist.

2. Sensor nach Anspruch 1, wobei das Fühlerelement ein Stabkern (2) ist.

3. Sensor nach Anspruch 2, wobei die Zugfeder (16) zwischen dem Stabkern (2) und dem Sensorrohr (4) angeordnet ist.

4. Sensor nach Anspruch 2 oder 3, wobei die Zugfeder (16) an dem Stabkern (2) an seinem entgegen die Ausfahrrichtung weisenden Endabschnitt (22) angreift.

5. Sensor nach einem der Ansprüche 2 bis 4, wobei die Zugfeder (16) an einer entgegen die Ausfahrrichtung weisenden Stirnseite des Stabkerns (2) angreift.

6. Sensor nach einem der Ansprüche 2 bis 5, wobei die Zugfeder (16) spiralförmig ausgebildet ist und den Stabkern (2) abschnittsweise umgreift.

7. Sensor nach Anspruch 5 oder 6, wobei die Zugfeder (16) in eine von der entgegen die Ausfahrrichtung weisenden Stirnseite (24) des Stabkerns (2) her eingebrachte Aussparung (26) eingreift.

8. Sensor nach Anspruch 7, wobei ein Endabschnitt (70) der Zugfeder (16) etwa in die Ausfahrrichtung weist und in die Aussparung (26) des Stabkerns (2) eintaucht.

9. Sensor nach einem der vorhergehenden Ansprüche, wobei die Zugfeder (16) mit einem Endabschnitt (72) außerhalb des Sensorrohrs (4) festgelegt ist.

10. Sensor nach Anspruch 9, wobei der außerhalb des Sensorrohrs (4) festgelegte Endabschnitt (72) der Zugfeder (16) radial von der Zugfeder (16) wegkragt und das Sensorrohr (4) übergreift.

11. Sensor nach einem der Ansprüche 2 bis 10, wobei der Stabkern (2) einerseits mit einem Ausfahrabschnitt (30) über ein Zentrierelement (32) zentriert ist und andererseits über die Zugfeder (16) zentriert ist.
